## Europäisches Patentamt
## European Patent Office
## Office européen des brevets

(11) Numéro de publication : **0 116 365 B1**

# FASCICULE DE BREVET EUROPÉEN

(45) Date de publication du fascicule du brevet :
30.09.87

(51) Int. Cl.⁴ : **H 01 M 4/04**, **H 01 M 4/26**

(21) Numéro de dépôt : **84101222.2**

(22) Date de dépôt.: **07.02.84**

(54) **Procédé de fabrication d'une électrode pour générateur électrochimique, et électrode obtenue par ce procédé.**

(30) Priorité : **08.02.83 FR 8301923**

(43) Date de publication de la demande :
**22.08.84 Bulletin 84/34**

(45) Mention de la délivrance du brevet :
**30.09.87 Bulletin 87/40**

(84) Etats contractants désignés :
**AT BE CH DE FR GB IT LI LU NL SE**

(56) Documents cités :
**DE-A- 3 001 598**
**DE-C-   197 504**
**FR-A- 1 024 344**
**FR-A- 1 100 216**
**FR-A- 2 143 636**
**JP-A-57 189 455**
**US-A- 2 683 181**
**US-A- 3 062 908**
**Le dossier contient des informations techniques présentées postérieurement au dépôt de la demande et ne figurant pas dans le présent fascicule.**

(73) Titulaire : **Société Anonyme dite SAFT**
**156, avenue de Metz**
**F-93230 Romainville (FR)**

(72) Inventeur : **Atkin, John**
**3 rue Benjamin Franklin**
**F-33160 St Medard En Jalles (FR)**
Inventeur : **Loustau, Marie-Thérèse**
**63 rue du Jardin Public**
**F-33000 Bordeaux (FR)**

(74) Mandataire : **Weinmiller, Jürgen et al**
**Lennéstrasse 9 Postfach 24**
**D-8133 Feldafing (DE)**

### Description

La présente invention concerne un procédé de fabrication d'une électrode pour générateur électrochimique, notamment mais non exclusivement pour accumulateur alcalin.

On connaît essentiellement deux procédés pour fabriquer une électrode dans un accumulateur alcalin.

Le premier procédé consiste à préparer directement de la manière active sous la forme granulaire appropriée et à l'introduire dans des tubes ou des pochettes en tôle métallique perforée servant de collecteurs de courant.

Pour certaines applications impliquant des décharges très rapides, les électrodes obtenues par cette méthode ne présentent pas des caractéristiques électriques suffisantes car elles ne comportent pas de réseau conducteur au sein même de la matière active.

Le second procédé (voir par exemple DE-A-3 015 981) permet d'éviter cet inconvénient car il consiste à introduire de la matière active dans une « éponge métallique » formée par un support fritté. Pour cela, on réalise d'abord le support à partir d'une bande de feuillard éventuellement perforée, ou de toile métallique, enduite d'une poudre métallique très fine ; on peut utiliser du nickel, du fer, etc... La bande enduite est passée dans un four et le frittage a lieu à température élevée (de l'ordre de 1 000 °C) en présence de gaz inertes ou réducteurs de manière à souder superficiellement les grains de poudre métallique à la fois entre eux et à la bande.

On peut également faire passer la bande préchauffée enduite de poudre dans un four équipé de générateurs haute fréquence (300 KHz à 600 KHz), ou moyenne fréquence (1 à 10 KHz), durant quelques secondes.

L'éponge frittée résultante (qui conférera à l'électrode de bonnes caractéristiques de conductibilité) est imprégnée de sels de métaux appropriés selon le type d'électrode concerné : nitrates, chlorures ou sulfates de nickel ou de cadmium par exemple. Ces sels subissent un traitement chimique et ils précipitent dans le support fritté sous forme d'hydroxyde de nickel, d'hydroxyde de cadmium, etc... Il est nécessaire d'éliminer ensuite par voie chimique ou électrochimique les sels résiduels néfastes. Après toutes ces opérations, on obtient une électrode composée d'un support métallique fritté dans les pores duquel est intégrée de la matière active à l'état déchargé. Il est clair que pour aboutir à ce résultat, il a fallu mettre en œuvre des équipements complexes, coûteux et également des quantités d'énergie importantes.

On connaît enfin par la demande de brevet japonais JP-A-57 189 455 un autre procédé de fabrication d'une petite électrode en forme de pastille pour un accumulateur nickel-cadmium de type bouton.

On réalise un mélange de poudre de nickel et de matière active et on effectue le frittage de la poudre métallique par induction à 200 KHz pendant une seconde.

Ce procédé s'avère inutilisable lorsque l'on souhaite réaliser des électrodes longues, destinées par exemple à être spiralées. Il est en effet indispensable dans ce cas d'intégrer dans le mélange poudreux un collecteur de courant métallique et on constate alors que l'électrode obtenue par le procédé précédent s'effrite au bout de quelques heures en présence d'électrolyte.

La présente invention a pour but d'éviter ces inconvénients et de proposer un procédé économique permettant d'obtenir des électrodes de performances comparables à celles des électrodes existantes.

La présente invention a pour objet un procédé de fabrication pour générateur électrochimique, selon lequel on réalise un mélange intime de poudre métallique conductrice avec une matière active sous forme granulaire et que l'on effectue le frittage de ladite poudre métallique en lui appliquant un champ magnétique variable, caractérisé par le fait que l'on intègre audit mélange pulvérulent un collecteur de courant métallique, que l'on fait passer l'ensemble à travers ledit champ magnétique variable induit par des trains d'impulsions de courant, la fréquence desdites impulsions étant choisie entre 1 mégahertz environ et 10 mégahertz, la durée d'un train d'impulsions étant supérieure à 0,05 seconde et l'intervalle entre deux trains successifs étant au moins égal à la durée d'un train d'impulsions, de manière à assurer le frittage de ladite poudre métallique, sans altérer les grains de matière active.

Le collecteur de courant peut se présenter sous la forme d'une feuille de métal déployé, d'une toile métallique, constituant un cadre, une grille, ou équivalent. On peut utiliser par exemple de l'acier ou de l'acier nickelé.

Afin de favoriser le contact étroit entre les grains métalliques et les grains de matière active, on comprime avantageusement le mélange sur ledit collecteur de courant.

Cette compression peut être préalable au frittage proprement dit, ou avoir lieu pendant le frittage entre deux trains d'impulsions.

Le frittage a lieu de préférence sous atmosphère inerte ou réductrice ; le gaz de frittage peut contenir de la vapeur d'eau.

La présente invention a également pour objet une électrode obtenue par le procédé précité ; le mélange peut comporter (en poids) 10 % à 90 % de poudre métallique et 90 % à 10 % de matière active.

Avantageusement, le mélange est additionné de graphite dans une proportion pondérale comprise entre 0,05 % et 15 %.

Sa fonction est de réduire des oxydes métalliques néfastes qui pourraient apparaître par échauffement de la matière active et recouvrir la surface de ses grains.

Le mélange fritté peut être découpé à la dimension voulue, suivant une géométrie quelconque ; il peut être utilisé tel quel comme électrode.

D'autres caractéristiques et avantages de l'invention apparaîtront au cours de la description suivante d'un exemple de réalisation d'une électrode à l'hydroxyde de nickel pour un accumulateur nickel-cadmium, exemple donné à titre illustratif mais nullement limitatif.

Dans le dessin annexé :

la figure 1 est une vue très schématique d'une portion d'électrode selon l'invention,

la figure 2 montre de manière schématique et agrandie le mélange de poudre de l'électrode de la figure 1,

la figure 3 est un schéma très simplifié d'un dispositif pour fabriquer l'électrode de la figure 1.

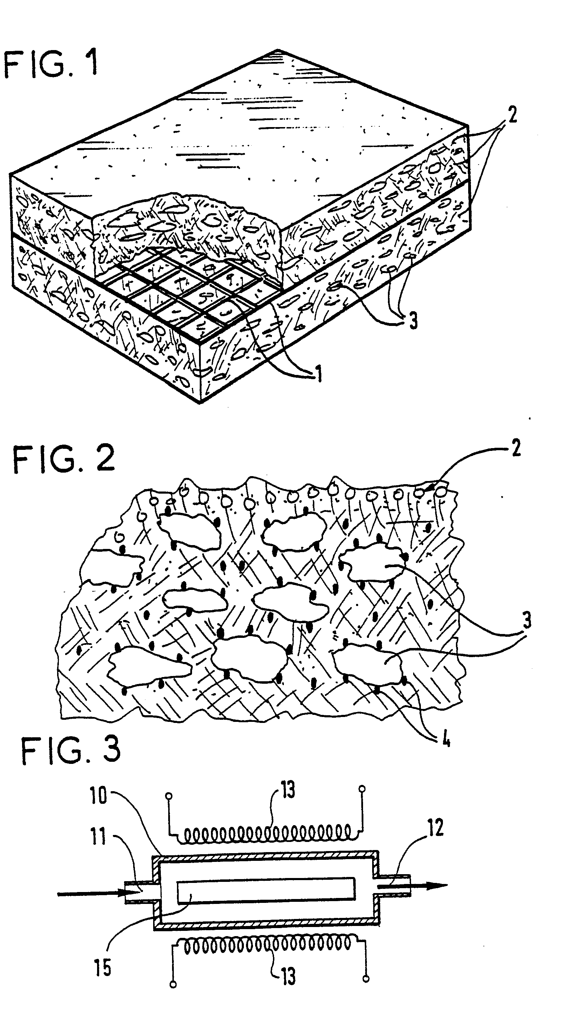

On voit dans la figure 1, un schéma montrant une portion d'électrode à l'hydroxyde de nickel. Elle comporte une bande de grillage métallique 1 en nickel ou en acier nickelé, recouvert sur ses deux faces d'un mélange de poudre de nickel, d'hydroxyde de nickel et de graphite dans les proportions mentionnées plus haut.

On voit dans la figure 2 les grains de nickel 2, d'hydroxyde de nickel 3 et les pellicules de graphite 4.

Après avoir subi une compression l'électrode 15 est disposée dans un four à induction que l'on voit dans la figure 3.

La cloche 10 du four est entourée d'un inducteur 13 qui produit un champ électrique d'environ 1 mégahertz. Une entrée 11 et une sortie 12 sont prévues dans la cloche 10 pour la circulation d'un gaz léger réducteur ou neutre, l'hydrogène par exemple. Le gaz remplit la cloche en refoulant l'air qu'elle contient et s'échappe par un tube de trop plein.

On applique le champ magnétique variable pendant le temps le plus court possible pour réaliser le frittage des grains de nickel sans pour autant altérer les grains d'hydroxyde de nickel. Ainsi on met en œuvre des trains d'impulsions de 0,1 seconde séparés par des intervalles de 10 secondes.

Pendant l'application du champ, les corps conducteurs du mélange (poudre de nickel et graphite) chauffent car ils sont parcourus par des courants de Foucault. Les intervalles entre trains d'impulsions permettent de dissiper l'énergie provoquée par le frittage du nickel et d'éviter ainsi d'échauffer les grains d'hydroxyde de nickel.

Un frittage convenable est obtenu après l'application de 10 trains d'impulsions de 0,1 seconde.

Selon une variante de réalisation, le gaz réducteur contient de la vapeur d'eau ; on a constaté que ceci améliorait le rendement électrique de l'hydroxyde de nickel.

Le procédé selon l'invention permet d'obtenir directement une électrode avec sa matière active intégrée dans un support fritté. Toutes les opérations d'imprégnation et de traitements chimiques sont évitées.

Il va de soi que des modifications peuvent être apportées au procédé qui vient d'être décrit ; par exemple on peut procurer un refroidissement plus efficace par un courant de gaz froid, mise en œuvre d'un serpentin de refroidissement ou autre moyen.

Il va de soi également que l'étape de compression pourrait avoir lieu soit par laminage soit par pressage, et que dans une autre variante du procédé on pourrait intercaler les étapes de compression entre les étapes de frittage et de refroidissement.

Toute autre forme de collecteur de courant peut être mise en œuvre.

L'invention n'est pas limitée à un générateur électrochimique du type accumulateur alcalin. A titre d'exemple la matière active peut être choisie parmi les oxydes de plomb, de fer, de cadmium, de zinc, les hydroxydes de cadmium et de nickel.

La poudre métallique peut être choisie parmi le nickel, le plomb, le cadmium, le fer, le cuivre, l'argent, le zinc.

## Revendications

1. Procédé de fabrication d'une électrode pour générateur électrochimique, selon lequel on réalise un mélange intime de poudre métallique conductrice avec une matière active sous forme granulaire et que l'on effectue le frittage de ladite poudre métallique en lui appliquant un champ magnétique variable, caractérisé par le fait que l'on intègre audit mélange pulvérulent un collecteur de courant métallique, que l'on fait passer l'ensemble à travers ledit champ magnétique variable induit par des trains d'impulsions de courant, la fréquence desdites impulsions étant choisie entre 1 mégahertz environ et 10 mégahertz, la durée d'un train d'impulsions étant supérieure à 0,05 seconde, et l'intervalle entre deux trains successifs étant au moins égal à la durée d'un train d'impulsions, de manière à assurer le frittage de ladite poudre métallique, sans altérer les grains de matière active.

2. Procédé de fabrication selon la revendication 1, caractérisé par le fait que la structure dudit collecteur est choisie parmi une bande, une feuille de métal déployé, une toile métallique, des barreaux constituant un cadre ou une grille.

3. Procédé selon l'une des revendications 1 et 2, caractérisé par le fait que l'on comprime ledit mélange sur ledit collecteur.

4. Procédé selon la revendication 3, caractérisé par le fait que l'on applique ladite pression entre deux trains d'impulsions.

5. Procédé selon la revendication 1, caractérisé par le fait que l'on réalise le frittage sous atmosphère inerte ou réductrice.

6. Procédé selon la revendication 5, caractérisé par le fait que le gaz de frittage contient de la vapeur d'eau.

7. Electrode obtenue à l'aide du procédé selon l'une des revendications précédentes, caractérisée par le fait que ledit mélange comporte en poids :

10 % à 90 % de poudre métallique (2)
90 % à 10 % de matière active (3).

8. Electrode selon la revendication 7, caractérisée par le fait que ledit mélange est additionné de graphite (4) dans une proportion pondérale comprise entre 0,05 % et 15 %.

9. Electrode selon la revendication 7, caractérisée par le fait que ladite matière active est choisie parmi les oxydes de plomb, de fer, de cadmium, de zinc, les hydroxydes de cadmium et de nickel, et que ladite poudre métallique est choisie parmi le nickel, le plomb, le cadmium, le fer, le cuivre, l'argent, le zinc.

## Claims

1. A method of manufacturing an electrode for an electrochemical generator, according to which an intimate mixture of conductive metall powder and an active material in granular form is realized and the sintering of said metal powder is carried out by submitting it to a variable magnetic field, characterized in that a metallic current collector is integrated into the powder mixture, that the unit passes through said variable magnetic field induced by current pulse trains, the frequency of said pulses being chosen between about 1 MHz and 10 MHz, the duration of a pulse train being longer than 0,05 second and the interval between two successive trains being at least equal to the duration of a pulse train, so as to ensure the sintering of said metal powder without altering the active material grains.

2. A manufacturing method according to claim 1, characterized in that the structure of said collector is chosen amongst a tape, a sheet of extended metal, a metal fabric, bars constituting a frame or a grid.

3. A method according to one of claims 1 and 2, characterized in that said mixture is compressed onto said collector.

4. A method according to claim 3, characterized in that said compression is performed between two pulse trains.

5. A method according to claim 1, characterized in that the sintering is carried out under inert or reducing atmosphere.

6. A method according to claim 5, characterized in that the sintering gas contains water vapour.

7. An electrode obtained by means of the method according to one of the preceding claims, characterized in that said mixture comprises by weight :
10 to 90 % metal powder (2)
90 to 10 % active material (3).

8. An electrode according to claim 7, characterized in that graphite (4) is added to said mixture in a weight proportion comprised between 0,05 % and 15 %.

9. An electrode according to claim 7, characterized in that said active material is chosen amongst the oxides of lead, iron, cadmium, zinc, and the hydroxides of cadmium and nickel, and that said metal powder is chosen amongst nickel, lead, cadmium, iron, copper, silver, zinc.

## Patentansprüche

1. Verfahren zur Herstellung einer Elektrode für einen elektrochemischen Generator, gemäß dem man eine innige Mischung zwischen einem leitenden Metallpulver und einem körnigen aktiven Material bildet und das Sintern des Metallpulvers durchführt, indem man es einem variablem Magnetfeld aussetzt, dadurch gekennzeichnet, daß man der pulverförmigen Mischung einen metallischen Stromkollektor integriert, daß man das Ganze durch dieses variable Magnetfeld führt, das durch Stromimpulszüge induziert wird, wobei die Frequenz der Impulse zwischen etwa 1 MHz und 10 MHz gewählt wird, die Dauer eines Impulszuges länger ist als 0,05 Sekunden und der Abstand zwischen zwei aufeinanderfolgenden Zügen mindestens gleich der Dauer eines Impulszuges ist, um das Sintern des Metallpulvers zu bewirken, ohne daß die Körner des aktiven Materials verändert würden.

2. Herstellungsverfahren nach Anspruch 1, dadurch gekennzeichnet, daß die Struktur des Kollektors aus einem Band, einer Folie ausgebreiteten Metalls, einem Metallgeflecht, einen Rahmen oder ein Gitter bildenden Stangen ausgewählt wird.

3. Verfahren nach einem der Ansprüche 1 und 2, dadurch gekennzeichnet, daß die Mischung auf den Kollektor aufgepreßt wird.

4. Verfahren nach Anspruch 3, dadurch gekennzeichnet, daß man das Pressen zwischen zwei Impulszügen durchführt.

5. Verfahren nach Anspruch 1, dadurch gekennzeichnet, daß man das Sintern unter Inertatmosphäre oder unter reduzierender Atmosphäre durchführt.

6. Verfahren nach Anspruch 5, dadurch gekennzeichnet, daß das Sintergas Wasserdampf enthält.

7. Mithilfe des Verfahrens nach einem der vorstehenden Ansprüche hergestellte Elektrode, dadurch gekennzeichnet, daß die Mischung in Gew.-% aufweist :
10 bis 90 % Metallpulver (2)
90 bis 10 % aktives Material (3).

8. Elektrode nach Anspruch 7, dadurch gekennzeichnet, daß der Mischung Graphit in einem Gewichtsanteil von zwischen 0,05 und 15 % hinzugefügt wird.

9. Elektrode nach Anspruch 7, dadurch gekennzeichnet, daß das aktive Material ausgewählt wird aus den Oxiden des Bleis, des Eisens, des Cadmiums, des Zinks, sowie den Hydroxiden des Cadmiums und des Nickels, und daß das Metallpulver ausgewählt wird aus Nickel, Blei, Cadmium, Eisen, Kupfer, Silber, Zink.

FIG. 1

2

3

1

FIG. 2

2

3

4

FIG. 3

10

13

11

12

15

13